# FASCICULE DE BREVET EUROPEEN

(11) **EP 4 472 105 B1**
(45) Date de publication et mention de la délivrance du brevet: **22.10.2025**
(21) Numéro de dépôt: 24178564.1
(22) Date de dépôt: 28.05.2024
(51) Int. Cl.: H04B 10/118, H04B 7/185

(54) **SYSTÈME SPATIAL ET PROCÉDÉ DE COMMUNICATION SANS FIL PAR TRANSMISSION DE SIGNAUX RADIOFRÉQUENCES ET OPTIQUES PAR VOIE RETOUR**
RAUMSYSTEM UND VERFAHREN ZUR DRAHTLOSEN KOMMUNIKATION DURCH ÜBERTRAGUNG VON HOCHFREQUENZ- UND OPTISCHEN SIGNALEN ÜBER RÜCKKANAL
SPATIAL SYSTEM AND METHOD FOR WIRELESS COMMUNICATION BY RF AND OPTICAL FEEDBACK SIGNAL TRANSMISSION

(30) Priorité: 01.06.2023 FR 2305491
(43) Date de publication de la demande: 04.12.2024
(73) Titulaire: Thales, 92190 Meudon (FR)
(72) Inventeur: BENADDI, Tarik, 31100 TOULOUSE (FR)
(74) Mandataire: Atout PI Laplace

(56) Documents cités:
- US-A1- 2023 092 301
- RYAN SHOUP ET AL: "Using DVB-S2 over asymmetric heterogeneous optical to radio frequency satellite links", MILITARY COMMUNICATIONS CONFERENCE, 2010 - MILCOM 2010, IEEE, PISCATAWAY, NJ, USA, 31 October 2010 (2010-10-31), pages 785 - 790, XP031843888, ISBN: 978-1-4244-8178-1
- NANCY LIST ET AL: "Incorporation of uplink channel state information into an end-to-end coded satellite communication system", MILITARY COMMUNICATIONS CONFERENCE, 2011 - MILCOM 2011, IEEE, 7 November 2011 (2011-11-07), pages 2076 - 2080, XP032092892, ISBN: 978-1-4673-0079-7, DOI: 10.1109/MILCOM.2011.6127625

## Description

### Domaine technique

La présente invention concerne de manière générale le domaine spatial des communications, et en particulier un système et un procédé de communication sans fil utilisant, pour la voie retour, des transmissions de signaux optiques.

Au cours des années passées, les nouveaux services de télécommunication nécessitant des débits accrus se sont significativement développés, suite à la forte concurrence que connaît le domaine des réseaux de communication terrestres. En particulier, pour répondre au besoin de réduction de la fracture numérique visant à faire bénéficier tout utilisateur de la même qualité de service, où qu'il soit, y compris pour les utilisateurs ne pouvant être connectés au réseau terrestre, les besoins en capacité de transmission des opérateurs satellites sont devenus très importants et ont nécessité un déploiement de systèmes à très haut débit améliorés (ou HTS/VHTS/UHTS pour *High*/*Very HighlUltra High Throughput Systems* selon l'expression anglo-saxonne correspondante).

Cependant, ces demandes de capacité sont telles qu'aujourd'hui les technologies traditionnelles de communication sans fil par satellite atteignent leurs limites. En effet, de telles technologies basées sur la transmission d'ondes radiofréquence (RF) connaissent une saturation des bandes spectrales RF utilisables, sont soumises à de fortes contraintes réglementaires, et présentent des limites importantes. Dans ce contexte, les technologies optiques, capitalisant sur les développements des télécoms terrestres par fibre optique à très haut débit, constituent une alternative prometteuse pour la transmission de données à très haut débit pour un spectre étendu d'applications, telles que les mégaconstellations de satellites télécoms, les satellites géostationnaires à très haute capacité, les liens point-à-point haut débit satellite-utilisateur, la transmission d'importants volumes de données d'observation de satellites vers le sol, etc. En outre, ces technologies optiques permettent d'accéder à de larges bandes de fréquences moins congestionnées que les signaux RF et non licenciées, d'atteindre des débits très élevées et de réduire la taille des terminaux bord et sol.

Cependant, les liaisons satellitaires de communications optiques sans fil à travers l'atmosphère sont soumises à des effets de propagation plus défavorables que les liaisons radiofréquences. En effet, la composition des couches de l'atmosphère et les turbulences de l'atmosphère induisent de fortes dégradations sur un signal optique et génèrent des évanouissements profonds, interrompant ainsi la transmission de services pendant plusieurs millisecondes.

Il existe des solutions de systèmes satellitaires de communication sans fil utilisant des technologies optiques et, en particulier, des méthodes d'entrelacement de signal pour pallier ce problème d'évanouissement des signaux optiques.
L'article de Ryan Shoup et al. "Using DVB-S2 over asymmetric heterogeneous optical to radio frequency satellite links", MILCOM 2010, décrit un système de communication par satellite comprenant une liaison montante optique et une liaison descendante RF, un décodage par décision souple, LLR, dans le récepteur terrestre, un code correcteur d'erreurs, FEC, entrelacement et désentrelacement de trames.
   - L'article de Nancy List et al. "Incorporation of uplink channel state information into an end-to-end coded satellite communication system", MILCOM 2011, décrit un système de communication par satellite codé de bout en bout, mentionne la possibilité de retransmettre - sur la liaison descendante - des décisions souples sur les bits du canal de liaison montante et divulgue un décodage par décision souple, LLR, dans le récepteur terrestre, un code correcteur d'erreurs, FEC, entrelacement et désentrelacement de trames.
Le document de brevet US 2023/092301 A1 décrit un système de communication par satellite avec conversion au niveau du satellite de flux de données radiofréquences montantes en liaisons optiques à large bande modulées en fréquence.

Il a notamment été proposé des architectures dites « régénératives » de satellite, dans un système de communications sans fil utilisant, pour la voie retour, la régénération complète des données à partir de la fonction de démodulation et de décodage du signal RF transmis par des équipements utilisateurs de services. Cependant, une telle architecture régénérative présente l'inconvénient de nécessiter une implémentation très complexe à bord du satellite. En effet, les architectures régénératives sont difficiles à mettre en œuvre compte tenu de la complexité des traitements de réception de signaux RF et du très grand nombre de porteuses RF à considérer dans le cas d'un déploiement de systèmes VHTS.

Il est également envisagé des architectures dites « transparentes » de satellite dans un système de communications sans fil utilisant, pour la voie retour, la numérisation directe des porteuses RF transmis par des équipements utilisateurs de services. Cependant, une telle numérisation nécessite d'utiliser une fréquence d'échantillonnage élevée selon le critère de Nyquist et un nombre de bits de quantification très élevé, par exemple supérieur à une dizaine de bits par échantillon. En raison d'un tel sur-échantillonnage, l'architecture transparente présente l'inconvénient d'une grande expansion de l'occupation spectrale des signaux transmis sur le lien optique en liaison descendante, pour pouvoir transmettre le débit important des porteuses RF numérisées. L'utilisation d'une bande spectrale optique large induit également l'implémentation d'un plus grand nombre d'équipements de type amplificateurs optiques hautes puissances ou multiplexeurs, par exemple à bord du satellite.

Ces architectures transparentes et régénératives présentent ainsi des inconvénients quasi inévitables qui freinent leurs déploiements à court et moyen terme.

Il existe ainsi un besoin pour un système satellitaire amélioré de communication sans fil utilisant des technologies optiques.

### Résumé de l'invention

La présente invention vient améliorer la situation en proposant un satellite de communication configuré pour émettre un signal optique, à travers un canal optique de transmission, en réponse à la réception d'au moins un signal radiofréquence modulé et encodé. Le satellite comprend :
- une unité de démodulation souple configurée pour appliquer une démodulation souple au au moins un signal radiofréquence reçu, ce qui fournit une pluralité de N trames de données démodulées intermédiaires B₁₋ₙ, chaque trame de données démodulées intermédiaires B₁₋ₙ comprenant un ensemble de valeurs souples numérisées ;
- une unité d'encodage configurée pour appliquer un code correcteur d'erreur aux trames de données démodulées intermédiaires B₁₋ₙ, ce qui fournit une pluralité de N trames de données démodulées intermédiaires encodées B₂₋ₙ ;
- une unité d'entrelacement configurée pour entrelacer les N trames de données démodulées intermédiaires encodées B₂₋ₙ, ce qui fournit M trames de données entrelacées I₂₋ₘ ; et
- une unité de modulation sur porteuses optiques configurée pour appliquer, à chaque trame de données entrelacées I₂₋ₘ, une modulation sur porteuse optique de manière à former le signal optique.

Dans des modes de réalisation, pour chaque trame de données démodulées intermédiaires B₁₋ₙ, les valeurs souples numérisées peuvent être définies selon une distribution gaussienne. Le code correcteur d'erreur appliqué par l'unité d'encodage peut prendre en compte la distribution gaussienne des valeurs souples numérisées des trames B₁₋ₙ.

Avantageusement, pour chaque trame de données démodulées intermédiaires B₁₋ₙ, chaque bit de quantification des valeurs souples numérisées peut être associé à un indice d'importance. Le code correcteur d'erreur appliqué par l'unité d'encodage peut prendre en compte l'indice d'importance des bits des valeurs souples numérisées des trames B₁₋ₙ.

La présente invention propose de plus une station de communication configurée pour recevoir, à travers un canal optique de transmission, un signal optique associé à une pluralité de trames de données initiales T_{0-q}. La station de communication comprend :
- une unité de démodulation configurée pour démoduler le signal optique reçu, ce qui fournit M trames de données entrelacées démodulées I*₂₋ₘ ;
- une unité de désentrelacement configurée pour désentrelacer les M trames de données entrelacées démodulées I*₂₋ₘ, ce qui fournit une pluralité de N trames de données désentrelacées B*₂₋ₙ ;
- une unité de décodage configurée pour appliquer une fonction réciproque d'un code correcteur d'erreur aux trames de données désentrelacées B*₂₋ₙ, ce qui fournit une pluralité de N trames de données décodées B*₁₋ₙ, chaque trame B*₁₋ₙ comprenant un ensemble de valeurs souples numérisées ; et
- une unité de décodage configurée pour appliquer une fonction de décodage de valeurs souples numérisées à l'ensemble des N trames de données décodées B*₁₋ₙ, ce qui fournit une pluralité de N trames de données régénérées T*₀₋ₙ, chaque trame de données régénérées T*₀₋ₙ correspondant à une trame reconstituée de données initiales T₀₋ₙ.

Dans des modes de réalisation, la fonction réciproque du code correcteur d'erreur appliquée par l'unité de décodage peut prendre en compte une distribution gaussienne des valeurs souples des trames de données décodées B*₁₋ₙ générées.

Avantageusement, la fonction réciproque du code correcteur d'erreur appliquée par l'unité de décodage peut prendre en compte un indice d'importance associé à chaque bit des valeurs souples des trames de données décodées B*₁₋ₙ générées.

Les modes de réalisation de l'invention fournissent ainsi un système de communication sans fil comprenant un satellite de communication et une station de communication, reliés par un canal optique de transmission. La station de communication est configurée pour recevoir le signal optique en provenance du satellite de communication, à travers le canal optique de transmission, la fonction réciproque étant la fonction réciproque du code correcteur d'erreur appliqué par le satellite de communication.

Dans certains modes de réalisation, le satellite de communication peut comprendre en outre une unité de compression de trames à valeurs souples et la station de communication peut comprendre en outre une unité de décompression de trames à valeurs souples.

Il est en outre proposé un procédé pour émettre un signal optique, le procédé étant mis en œuvre dans un satellite de communication relié à un canal optique de transmission. Le procédé comprend les étapes consistant à :
- recevoir au moins un signal radiofréquence modulé et encodé ;
- appliquer une démodulation souple au au moins un signal radiofréquence reçu pour déterminer une pluralité de N trames de données démodulées intermédiaires B₁₋ₙ, chaque trame B₁₋ₙ comprenant un ensemble de valeurs souples numérisées ;
- appliquer un code correcteur d'erreur aux trames de données démodulées intermédiaires B₁₋ₙ pour déterminer une pluralité de N trames de données démodulées intermédiaires encodées B₂₋ₙ ;
- appliquer une fonction d'entrelacement aux trames de données démodulées intermédiaires encodées B₂₋ₙ pour déterminer M trames de données entrelacées I₂₋ₘ ;
- appliquer une modulation sur porteuse optique à chaque trame de données entrelacées I₂₋ₘ, ce qui fournit le signal optique ; et
- émettre le signal optique à travers le canal optique de transmission.

Il est également proposé un procédé de réception d'un signal optique, le procédé étant mis en œuvre par une station de communication reliée à un canal optique de transmission. Le procédé comprend les étapes consistant à :
- recevoir le signal optique associés à une pluralité de trames de données initiales T_{0-q}, à travers le canal optique de transmission ;
- appliquer une démodulation au signal optique reçu, ce qui fournit M trames de données entrelacées démodulées I*₂₋ₘ ;
- appliquer une fonction de désentrelacement aux trames de données entrelacées démodulées I*₂₋ₘ, ce qui fournit une pluralité de N trames de données désentrelacées B*₂₋ₙ ;
- appliquer une fonction réciproque d'un code correcteur d'erreur aux trames de données désentrelacées B*₂₋ₙ, ce qui fournit une pluralité de N trames de données décodées B*₁₋ₙ, chaque trame B*₁₋ₙ comprenant un ensemble de valeurs souples numérisées ; et
- appliquer une fonction décodage de valeurs souples numérisées à l'ensemble des N trames de données décodées B*₁₋ₙ pour déterminer une pluralité de N trames de données régénérées T*₀₋ₙ, chaque trame de données régénérées T*₀₋ₙ correspondant à une trame reconstituée de données initiales T₀₋ₙ.

Les modes de réalisation de l'invention permettent d'améliorer la communication satellitaire sans fil, en termes de performance de transmission de données pour la voie retour, et de bande spectrale optique occupée.

Ils permettent d'obtenir une solution abordable, en termes de complexité matérielle à implémenter, d'accessibilité technologique mature spatialisable aujourd'hui, et de consommation énergétique (ressources dans les traitements numériques pour le stockage mémoire par exemple) à bord du satellite, déportant ainsi une grande partie de cette complexité vers la station de communication au sol.

Ils permettent également d'implémenter une solution d'entrelacement des données à bord du satellite et de compenser les turbulences du canal optiques.

L'utilisation de technologies et de longueur d'ondes optiques, dans le système de communication sans fil selon les modes de réalisation de l'invention, permet de profiter de l'absence de régulation de fréquence optique, des hauts débits accessibles, de la large disponibilité et du coût réduit des composants optiques éprouvés au sol correspondant au bénéfice des efforts de recherche et développement des télécoms terrestres. Elle permet en outre une réduction de la masse/consommation des équipements optiques, de la synergie possible avec les réseaux terrestres, et de la synergie possible avec les charges utiles photoniques à bord du satellite.

### Description des figures

D'autres caractéristiques, détails et avantages de l'invention ressortiront à la lecture de la description faite en référence aux dessins annexés donnés à titre d'exemple.
[Fig.1] La figure 1 est un schéma représentant un système de communication sans fil, selon des modes de réalisation de l'invention.
[Fig.2] La figure 2 est un schéma représentant un dispositif de communication sans fil, selon des modes de réalisation de l'invention.
[Fig.3] La figure 3 est un schéma représentant un satellite comprenant une charge utile de communication sans fil, selon des modes de réalisation de l'invention.
[Fig.4] La figure 4 est un schéma représentant une station de communication, selon des modes de réalisation de l'invention.
[Fig.5] La figure 5 est un organigramme représentant les étapes du procédé de communication sans fil mises en œuvre par la charge utile de communication sans fil, selon des modes de réalisation de l'invention.
[Fig.6] La figure 6 est un organigramme représentant les étapes du procédé de communication sans fil mises en œuvre par la station de communication, selon des modes de réalisation de l'invention.

Des références identiques sont utilisées dans les figures pour désigner des éléments identiques ou analogues. Pour des raisons de clarté, les éléments représentés ne sont pas à l'échelle.

### Description détaillée

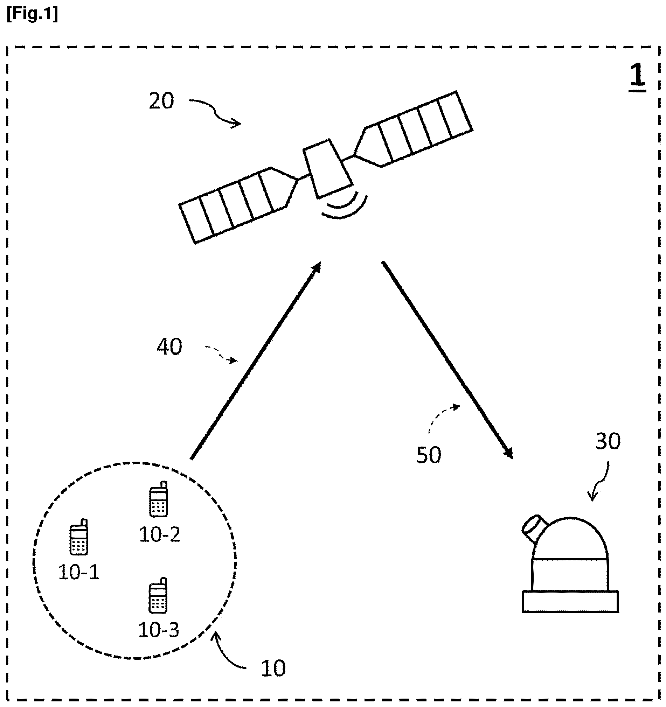

La figure 1 représente schématiquement un système de communication sans fil 1 comprenant un ensemble d'éléments communiquant entre eux, selon des modes de réalisation de l'invention.

Le système de communication sans fil 1 est une infrastructure de communication de réseau non terrestre (ou NTN pour *Non-Terrestrial Networks* selon l'expression anglo-saxonne correspondante) appliquée au domaine spatial des communications. A titre d'illustration, le système 1 peut comprendre un ensemble 10 de Q terminaux de communication sans fil 10-q, une plateforme satellite de communication 20 et une station de communication associée 30.

L'ensemble 10 correspond aux terminaux de communication sans fil desservis dans la zone de couverture de la plateforme satellite de communication 20. Un terminal de communication sans fil 10-q (appelé également 'station terminale' ou 'dispositif client') désigne un équipement utilisateur UE (acronyme pour *'user equipment'*) configuré pour transmettre et recevoir des données à travers le système 1. L'équipement utilisateur, utilisé par un utilisateur final, est configuré pour consommer et/ou créer un service via un ou plusieurs réseaux de communication hétérogènes d'accès basés sur une variété de technologies d'accès, de normes et de protocoles. Le nombre Q de terminaux du système est un entier positif supérieur ou égal à 1. Le paramètre 'q' désigne un indice associé à n'importe quel terminal de communication sans fil du système, et est un entier compris entre 1 et Q.

La plateforme satellite de communication 20 (appelé également 'plateforme spatiale' ou 'satellite') peut être n'importe quel type de satellite de communication en orbite au-dessus de la surface de la Terre configuré pour desservir une zone de couverture associée à l'ensemble 10 des terminaux de communication sans fil 10-q. Selon la mise en œuvre de l'invention, le système de communication sans fil 1 peut comprendre une ou plusieurs plateformes spatiales 20 configurées en une ou plusieurs constellations pour fournir une couverture mondiale, nationale, supranationale ou régionale pour des ensembles de terminaux de communication sans fil. Le ou les plateformes spatiales 20 peuvent être déployées à différentes altitudes sur diverses orbites autour de la terre pour faciliter la couverture de service sur différentes zones géographiques. Dans certains modes de réalisation représentatifs, les plateformes spatiales peuvent être disposées sur une orbite terrestre géosynchrone ou géostationnaire (GSO ou GEO) à une altitude de 35 786 km de la surface terrestre avec une période orbitale de 24 heures. Dans d'autres exemples de modes de réalisation, les plateformes spatiales peuvent être disposées par exemple sur une orbite terrestre moyenne (MEO) plus proche de la surface terrestre, sur une orbite terrestre basse (LEO), ou encore sur des orbites dites hautement elliptiques (HEO).

La station de communication 30 peut être un nœud de commutation de passerelle de services (ou 'nœud passerelle' pour *Gateway station* selon l'expression anglo-saxonne correspondante) qui peut être couplé à un ou plusieurs réseaux terrestres de communication (non représentés sur les figures). Un tel nœud passerelle 30 forme ainsi une passerelle entre l'infrastructure de communication de réseau non terrestre et tout type de réseaux ou combinaison de réseaux terrestres de communication.

Tel qu'utilisé ici, le terme « service » fait référence aux services téléphoniques, aux services de données ou à tout autre service proposé par des fournisseurs de réseaux d'accès, à des utilisateurs ou abonnés via un équipement utilisateur. Par exemple et sans limitation, les services peuvent être des communications par satellite (voix, données, texte, vidéo et/ou Internet), des services mobiles terrestres par satellite, des services mobiles maritimes par satellite, de la diffusion multimédia services, des services de navigation et positionnement global, etc. Un service peut être construit à partir d'un protocole de communication cellulaire de première génération (1G), de deuxième génération (2G), de troisième génération (3G), de quatrième génération (4G), ou de cinquième génération (5G), d'un protocole d'accès par paquets à haut débit (ou HSPA pour *High Speed Packet Access* selon l'expression anglo-saxonne correspondante), d'accès par paquets à liaison descendante à haut débit (ou HSDPA pour *High Speed Downlink Packet Access*), d'accès par paquets à liaison montante à haut débit (ou HSDPA pour *High Speed Uplink Packet Access*), d'un protocole de l'Internet des objets (ou loT pour *Internet of Things*), d'un protocole de diffusion vidéo numérique par communication par satellite (ou DVB-S pour *Digital Video Broadcasting - Satellite* selon l'expression anglo-saxonne correspondante), de DVB-S seconde génération (ou génération (ou DVB-S2), de communication d'extensions DVB-S2 (ou DVB-S2X), de DVB-S par canal de retour (ou DVB-RCS), de DVB-RCS seconde génération (ou DVB-RCS2), etc. Des exemples d'équipement utilisateur peuvent ainsi comprendre des téléphones satellites, des terminaux multimodes de communication de réseau non terrestre, de communication cellulaire terrestre ou de communication Wi-Fi, ainsi que des véhicules connectés (manuels et/ou autonomes), des consoles de jeu en réseau ou locaux, des lecteurs multimédias, et tout dispositif portable tel que des montres intelligentes, des ordinateurs portables, des tablettes, des téléphones mobiles, des capteurs loT, ou des dispositifs de réalité augmentée, de réalité virtuelle ou de réalité mixte, etc.

Le système de communication sans fil 1 comprend un premier canal de transmission 40 (communément appelé *user link* selon l'expression anglo-saxonne) d'une ou plusieurs liaisons, établies entre l'ensemble 10 des terminaux de communication et la plateforme spatiale 20, ainsi qu'un deuxième canal de transmission 50 (communément appelé *feeder link* selon l'expression anglo-saxonne) d'une ou plusieurs autres liaisons, établies entre la plateforme spatiale 20 et la station de communication associée 30. Dans la suite de la description, le canal de transmission 50 sera encore appelé 'canal optique'.

Chaque canal de transmission 40 ou 50 comprend des liaisons montantes (ou UL pour *uplink* en anglais) et des liaisons descendantes (ou DL pour *downlink* en anglais). Les liaisons UL et DL d'un même canal de transmission s'effectuent dans la même bande de fréquences ou dans des bandes de fréquences différentes. Pour le premier canal de transmission 40, les liaisons UL correspondent au transfert de données des terminaux 10-q vers la plateforme spatiale 20, et les liaisons DL correspondent au transfert de données de la plateforme spatiale 20 vers les terminaux 10-q. Pour le deuxième canal de transmission 50, les liaisons UL correspondent au transfert de données de la station de communication 30 vers la plateforme spatiale 20 et les liaisons DL correspondent au transfert de données de la plateforme spatiale 20 vers la station de communication 30. Enfin, les liaisons entre la station de communication 30 et les terminaux 10-q, via la plateforme spatiale 20, encore appelées communications 'aller-retour', comprennent une voie aller et une voie retour. La voie aller correspond aux liaisons UL entre la station de communication 30 et la plateforme spatiale 20, associées aux liaisons DL entre la plateforme spatiale 20 et les terminaux 10-q. Similairement, la voie retour, comme représenté sur la figure 1, correspond aux liaisons UL entre les terminaux 10-q et la plateforme spatiale 20, associées aux liaisons DL entre la plateforme spatiale 20 et la station de communication 30.

Selon des modes de réalisation de la présente invention, le système de communication sans fil 1 comprend l'utilisation d'un premier ensemble de fréquences ou de bandes de fréquences *λ*₁ pour effectuer les liaisons UL à travers le premier canal de transmission 40 pour le transfert de données des terminaux 10-q vers la plateforme spatiale 20. Le système de communication sans fil 1 comprend également l'utilisation d'un deuxième ensemble de fréquences ou de bandes de fréquences *λ*₂ pour effectuer les liaisons DL à travers le deuxième canal de transmission 50 pour le transfert de données de la plateforme spatiale 20 vers la station de communication associée 30. Les modes de réalisation de l'invention permettent de traiter les transferts d'information le long de la voie retour d'un système de communication sans fil 1.

Avantageusement, le premier ensemble de fréquences *λ*₁ se situe dans le domaine des radiofréquences (RF) de sorte que les liaisons UL effectuées à travers le premier canal de transmission 40 correspondent à la transmission de signaux radiofréquence. Par exemple et sans limitations, le premier ensemble de fréquences *λ*₁ peut correspondre à une bande RF type « bande X » comprise typiquement entre 8 GHz et 12 GHz, à une bande RF type « bande K » comprise typiquement entre 22.5 GHz et 27 GHz, ou encore à une bande RF type « bande Ka » comprise typiquement entre 27 GHz et 40 GHz.

Avantageusement, le deuxième ensemble de fréquences *λ*₂ se situe dans le domaine optique de sorte que les liaisons DL effectuées à travers le deuxième canal de transmission 50 correspondent à la transmission de signaux dits signaux optiques. En particulier, le deuxième ensemble de fréquences *λ*₂ peut correspondre à une longueur d'onde ou à un intervalle de longueurs d'onde situé dans le domaine des infrarouges (IR), et des proches et lointains infrarouges. Par exemple et sans limitations, le deuxième ensemble de fréquences *λ*₂ peut correspondre à la longueur d'onde de 1550 nm.

Chaque dispositif 10-q du système de communication sans fil 1 est donc configuré pour générer un ou plusieurs signaux de communication radiofréquence construit à partir d'un protocole de communication. De tels signaux de communication radiofréquence sont alors des signaux radiofréquence modulés et encodés à partir de données à transmettre.

Le protocole de communication utilisé pour former de tels signaux de communication radiofréquence peut être par exemple défini selon la norme de transmission du contenu multimédia par satellite DVB-RCS2 (*Digital Video Broadcasting - Return Channel via Satellite - Second Génération* selon l'expression anglo-saxonne correspondante) établie par l'organisme de normalisation ETSI (*European Telecommunications Standards Institute* selon l'expression anglo-saxonne correspondante).

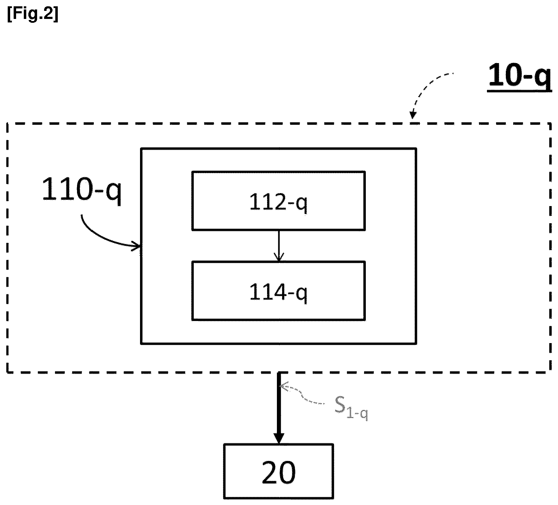

Par exemple, chaque terminal de communication sans fil 10-q peut comprendre un module 110-q de génération de signal tel que représenté schématiquement sur la figure 2, et un émetteur NTN radiofréquence 120-q non représenté sur les figures.

Dans des modes de réalisation, le module 110-q de génération de signal peut comprendre une unité 112-q d'encodage de données initiales configurée pour appliquer un premier code correcteur d'erreur à une trame de données initiales T_{0-q} de manière à déterminer une trame de données encodées T_{1-q}.

Tel qu'utilisée ici, l'expression 'trame de données' fait référence à des paquets de données comprenant des ensembles de valeurs ou de bits (i.e. d'éléments numériques consécutifs) spécifiés selon un protocole de communication.

Un code correcteur d'erreur (ou code FEC pour *Forward Error Correction* selon l'expression anglo-saxonne correspondante) désigne une technique, en théorie de l'information, pour détecter et corriger les erreurs qui affectent les données transmises sur un canal bruité. Le principe de cette technique est l'ajout (ou la concaténation), au niveau d'un émetteur, d'une information de redondance à la trame de données à transmettre. Cette information de redondance est ensuite utilisée par un récepteur pour vérifier et corriger les erreurs dans la trame de données reçue. Des exemples de code FEC connus sont les codes Reed Solomon, utilisés dans les communications numériques, les codes de contrôle de parité de faible densité (ou LDPC pour *low-density parity-check* en anglais), ou encore les Turbo codes.

Par exemple et sans limitations, le premier code correcteur d'erreur peut être une concaténation de la trame de données initiales T_{0-q} avec une première trame de redondance Tᵢ pour former la trame de données encodées T_{1-q}. La première trame de redondance Tᵢ correspond alors à un ensemble de bits de parité, c'est-à-dire un ensemble de bits calculés par rapport aux bits d'information des trames de données initiales T_{0-q}.

Le module 110-q de génération de signal peut également comprendre une unité 114-q de modulation de données sur porteuse RF configurée pour appliquer une modulation en amplitude et/ou en phase d'un signal radiofréquence, en fonction de la trame de données encodées T_{1-q} de manière à former un signal de communication radiofréquence à émettre via l'émetteur NTN radiofréquence 120-q à travers le premier canal de transmission 40. Ainsi, chaque trame T_{1-q} modulée sur un signal RF et émise par un terminal de l'ensemble 10 comprend une redondance d'une même ou de plusieurs trames de redondance Tᵢ.

Un code correcteur d'erreur permet ainsi de détecter et de corriger les erreurs générées au cours de la transmission des données T_{0-q} à travers le premier canal de transmission 40 via des signaux RF.

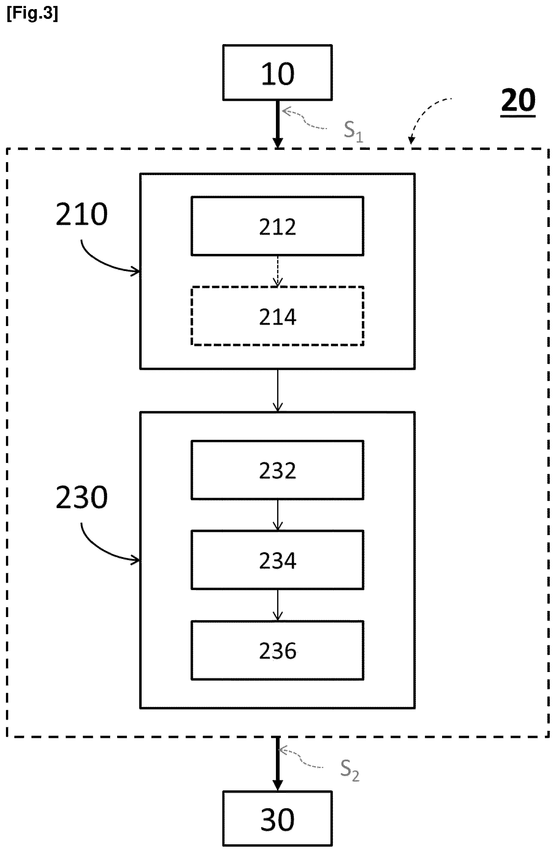

La figure 3 représente schématiquement la charge utile de communication de la plateforme satellite de communication 20 comprenant un module 210 de traitement de signaux RF et un module 230 de génération de signaux optiques, selon des modes de réalisation de l'invention.

La plateforme spatiale 20 est configurée pour recevoir en liaison UL un signal S₁ équivalent à un signal S_{1-q} radiofréquence modulé et encodé ou d'un signal S₁ résultant d'une agrégation de plusieurs signaux S_{1-q} radiofréquence modulés et encodés. La plateforme spatiale 20 est également configurée pour émettre en liaison DL un signal S₂ de communication optique.

La plateforme spatiale 20 est également configurée pour appliquer une démodulation souple à chacun des signaux S_{1-q} reçus pour déterminer une pluralité de N trames de données démodulées intermédiaires B₁₋ₙ. Le signal S₂ de communication optique est alors généré (ou produit) à partir d'au moins deux des N trames de données démodulées intermédiaires B₁₋ₙ.

Le nombre N de trames de données démodulées par la plateforme spatiale 20 est un entier positif supérieur ou égal à 2. Le paramètre 'n' désigne un indice associé à n'importe quelle trame de données démodulées, et est un entier compris entre 1 et N. Chaque signal radiofréquence reçu correspond à un signal de communication radiofréquence émis par un des dispositifs 10-q de l'ensemble 10 du système de communication sans fil 1. L'homme du métier comprendra que N trames de données démodulées par la plateforme spatiale 20 peuvent être préalablement définies à partir d'un seul ou plusieurs signaux de communication radiofréquence. Par exemple et sans limitation, un signal radiofréquence modulé et encodé reçu peut être associé à une trame de données modulée sur le signal RF, ou un signal radiofréquence peut comprendre une pluralité de trames de données à traiter.

Il est à noter que le signal S₂ de communication optique peut correspondre à un ensemble de sous signaux de communication optique.

La charge utile de communication peut comprendre également une ou plusieurs mémoires de stockage de données par exemple associées aux différentes unités de la chaine de traitement des signaux radiofréquence pour produire les signaux optiques.

Avantageusement, la plateforme spatiale 20 peut comprendre une antenne de liaison montante (non représentée sur les figures), fonctionnant dans le premier ensemble de fréquences *λ*₁, configurée pour recevoir le ou les signaux S_{1-q} radiofréquences modulés et encodés provenant de terminaux de communication sans fils 10-q. La plateforme spatiale 20 peut également comprendre une antenne de liaison descendante (non représentée sur les figures), également appelé terminal optique ou télescope, fonctionnant dans le deuxième ensemble de fréquences *λ*₂, configurée pour émettre le signal S₂ optique vers la station de communication 30.

Le module 210 de traitement de signaux RF comprend une unité 212 de démodulation souple de la pluralité de signaux RF reçus configurée pour déterminer une pluralité de N trames de données démodulées intermédiaires B₁₋ₙ.

Ainsi, l'unité 212 de démodulation souple RF est adaptée pour appliquer une démodulation RF souple au signal RF ou à la pluralité de signaux RF reçus modulés et encodés, pour déterminer, pour chaque bit associé à chaque trame de données encodées T₁₋ₙ (ou T₁₋ₙ), une valeur souple (également appelée valeur métrique) prenant en compte la probabilité de bruit induite affectant le signal RF à travers le premier canal de transmission 40.

Telle qu'utilisée ici, l'expression 'valeur souple' fait référence à une valeur qui n'est pas une valeur binaire dure, telle qu'un « 0 » ou un « 1 ». En particulier, l'application de la démodulation RF souple induit la détermination de valeurs de logarithme du rapport de vraisemblance (ou LLR pour *log-likelihood ratio* selon l'expression anglo-saxonne correspondante). Chaque valeur LLR est une valeur réelle et correspond à un ratio entre la probabilité pour un bit d'avoir une valeur égale à 0 prenant en compte le signal reçu et la probabilité pour ce même bit d'avoir une valeur de bit égale 1 prenant en compte le signal reçu.

L'unité 212 de démodulation souple RF est également adaptée pour quantifier sur un certain nombre de bits chaque valeur souple (ou valeur LLR) déterminée pour générer la trame de données démodulées intermédiaires B₁₋ₙ.

En particulier, une trame de données démodulées intermédiaires B₁₋ₙ peut comprendre des valeurs LLR codées sur un nombre restreint de bits. Par exemple, les valeurs LLR peuvent être codées sur moins d'une dizaine de bits.

Dans certains modes de réalisation, le module 210 de traitement de signaux RF peut également comprendre une unité 214 de compression de trames à valeurs souples configurée pour réduire la taille de la pluralité de N trames de données démodulées intermédiaires B₁₋ₙ avant d'être traitées par le module 230 de génération de signaux optiques.

Par exemple et sans limitations, l'unité 214 de compression peut implémenter un algorithme de quantification et de compression des données de valeurs LLR, défini à partir de différentes procédures d'optimisation. Une telle procédure peut être la minimisation du taux d'erreurs binaires entre les valeurs des LLR dites originales et les valeurs des LLR dites reconstituées par l'unité 212 de démodulation souple RF. Une telle procédure peut également être la maximisation sur l'information mutuelle entre les valeurs des LLR originales et les valeurs des LLR reconstituées.

Les signaux radiofréquence modulés et encodés traversant le premier canal de transmission 40 subissent des erreurs ou interférences de propagation à la traversée de l'atmosphère, suivant le modèle du canal Gaussien. De ce fait, la démodulation RF souple de signaux RF induit une distribution de valeurs LLR définie selon une distribution gaussienne. Avantageusement, l'unité 214 de compression peut implémenter un algorithme de compression de trames prenant en compte une telle distribution gaussienne des valeurs LLR.

Par exemple et sans limitations, l'unité 214 de compression peut implémenter un algorithme prenant en compte la distribution gaussienne des valeurs LLR pour définir des niveaux de quantifications non-uniformes des données de valeurs LLR de manière à minimiser le bruit de quantification d'une extrémité à l'autre d'une trame de données démodulées intermédiaires B₁₋ₙ à compresser.

Un tel module 210 de traitement de signaux RF selon les modes de réalisation de l'invention réduit significativement la complexité d'implémentation de la charge utile liée au traitement de signaux RF sur un satellite par rapport à la maturité technologique spatialisable d'une architecture régénérative complexe. Un tel module 210 de traitement de signaux RF permet également un gain significatif en termes de stockage mémoires des différentes trames au cours du traitement des trames de données démodulées intermédiaires (i.e. LLR numérisés) pour produire les signaux optiques.

Le module 230 de génération de signal optique comprend une unité 232 d'encodage de données démodulées intermédiaires configurée pour appliquer un deuxième code correcteur d'erreur à la pluralité de N trames de données démodulées intermédiaires B₁₋ₙ de manière à déterminer une pluralité de N trames de données démodulées intermédiaires encodées B₂₋ₙ.

Par exemple et sans limitations, le deuxième code correcteur d'erreur consiste à effectuer une concaténation d'une trame de données démodulées intermédiaires B₁₋ₙ avec une deuxième trame de redondance Bᵢ pour former une trame de données démodulées intermédiaires encodées B₂₋ₙ. La deuxième trame de redondance Bᵢ correspond alors à un ensemble de bits de parité, c'est-à-dire un ensemble de bits calculés par rapport aux bits d'information des trames de données démodulées intermédiaires B₁₋ₙ.

Avantageusement, l'application du deuxième code correcteur d'erreur au niveau de l'unité 232 d'encodage peut prendre en compte la distribution gaussienne des valeurs LLR induite par la démodulation RF souple de signaux RF.

Par ailleurs, la numérisation d'une valeur de LLR sur un nombre K de bits peut induire l'association de chaque k-ième bit avec un indice d'importance, k étant un entier compris entre 1 et K. En particulier, le premier bit d'une valeur de LLR numérisée peut avoir l'indice d'importance le plus fort et le dernier bit d'une valeur de LLR numérisée peut avoir l'indice d'importance le plus faible. En d'autres termes, les bits associés aux indices d'importance les plus grands (i.e. forts) représentent les parties de la trame (i.e. du flux binaire) les plus critiques ou importantes dans le processus de décodage de trames. Ainsi, ces parties peuvent bénéficier d'un ordre de protection plus élevé que les bits associés aux indices d'importance les plus faibles. Avantageusement, pour chaque trame de données démodulées intermédiaires B₁₋ₙ, l'application du deuxième code correcteur d'erreur et/ou l'application de la compression de trames peut également prendre en compte l'indice d'importance de chaque bit de chacune des valeurs de LLR de la trame.

Par exemple et sans limitations, le deuxième code correcteur d'erreur peut appliquer aux bits à indices d'importance élevé une protection plus robuste, et donc plus coûteuse en nombre de bits de redondance et aux bits à indices d'importance bas une protection plus légère, c'est-à-dire associé à une redondance comprenant un petit nombre de bits de redondance.

Par exemple et sans limitations, l'unité 232 d'encodage peut implémenter un algorithme de protection inégale des bits d'une trames contre les erreurs, prenant en compte des codes de modulations hiérarchiques (ou *hierarchical modulations* en anglais) ou des codes correcteurs d'erreurs multi-niveaux (ou *multi-level coding* en anglais).

Le module 230 de génération de signaux optiques comprend également une unité 234 d'entrelacement de données configurée pour appliquer une fonction d'entrelacement à l'ensemble des N trames de données démodulées intermédiaires encodées B₂₋ₙ, de manière à déterminer une pluralité de M trames de données entrelacées I₂₋ₘ.

Le nombre M de trames de données entrelacées est un entier positif supérieur ou égal à 1. Le paramètre 'm' désigne un indice associé à n'importe quel trame de données entrelacées, et est un entier compris entre 1 et M. Le nombre M peut être déterminé par exemple à partir du nombre N de trames de données démodulées intermédiaires encodées et/ou de la taille de chacune de ces trames. Dans des modes de réalisation, le nombre M peut être égal au nombre N.

Une fonction d'entrelacement (ou *interleaving* en anglais) utilise des techniques d'entrelacement (ou de mélanges) de bits entre différentes trames de données. En particulier, certaines techniques d'entrelacement dites 'temporelles' ont été développées pour contrer les évanouissements du canal optique subis par des signaux optiques. Un exemple de fonction d'entrelacement peut correspondre à un entrelacement dit « ligne-colonne ». Une telle fonction d'entrelacement utilise un 'entrelaceur par blocs' remplissant, ligne par ligne, une matrice de données de N lignes et M colonnes avec des bits ou des symboles d'entrée définis à partir des N trames de données démodulées intermédiaires encodées B₂₋ₙ. La fonction d'entrelacement détermine par la suite les M trames de données entrelacées I₂₋ₘ en utilisant le contenu de chaque colonne de la matrice de données obtenue.

Il est à noter que l'application d'une fonction d'entrelacement, même si elle ne dure que quelques millisecondes, implique le stockage mémoire de l'ensemble des N trames de données B₂₋ₙ à entrelacer. Ainsi, un gain significatif est obtenu, en termes de stockage en utilisant des valeurs LLR codées sur moins d'une dizaine de bits, ce qui permet d'obtenir des communications dédiées à des services à très haut débit en limitant l'expansion de la bande optique.

Le module 230 de génération de signaux optiques comprend également une unité 236 de modulation sur porteuses optiques configurée pour appliquer une modulation d'un signal optique de manière à former un signal S₂ de communication optique à émettre via le télescope de liaison descendante à travers le deuxième canal de transmission 50. Par exemple et sans limitation, une telle modulation peut être une modulation de phase, une modulation d'amplitude, une modulation de fréquence, ou toutes combinaisons de de modulations, telle qu'une modulation de phase et d'amplitude. Une modulation sur porteuses optiques est appliquée suivant un encodage de la pluralité de M trames de données entrelacées I₂₋ₘ sur le signal optique.

La modulation du signal optique peut être effectuée, par exemple et sans limitations, à partir d'une modulation par déplacement d'amplitude et de phase (ou APSK pour *Amplitude and Phase-Shift Keying* selon l'expression anglo-saxonne correspondante), une modulation d'amplitude en quadrature (ou QAM pour *Qaudrature Amplitude Modulation* selon l'expression anglo-saxone correspondante), une modulation de la famille des modulations par changement de phase (ou PSK pour *Phase-Shift Keying* selon l'expression anglo-saxonne correspondante) telle qu'une modulation BPSK (Bi ou 2-PSK avec deux valeurs de phase possibles), une modulation QPSK (Quad ou 4-PSK avec quatre valeurs de phase possibles), ou encore une modulation DPSK (Différentiel-PSK).

L'utilisation d'une unité 212 de démodulation souple de signaux RF dans le module 210 de traitement du satellite permet l'utilisation d'une taille de bande spectrale réduite sur le canal optique. A titre d'illustration, pour des valeurs LLR représentées sur moins d'une dizaine de bits, la largeur de la bande spectrale occupée par le signal S₂ peut être réduite jusqu'à 8 fois par rapport à la bande spectrale occupée par un signal optique émis par une architecture transparente numérique.

Dans des modes de réalisation, le signal S₂ peut être transmis à la station de communication 30 à partir d'une plateforme spatiale ou aéroportée de relai de signal optique.

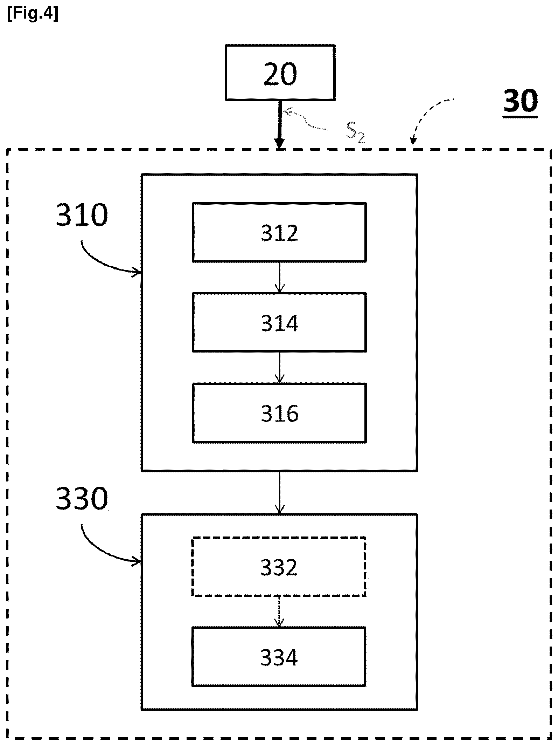

La figure 4 représente schématiquement une station de communication 30 comprenant un module 310 de traitement de signaux optiques et un module 330 de reconstruction de données, selon des modes de réalisation de l'invention.

La station de communication 30 est configurée pour recevoir le signal S₂ résultant émis par la plateforme spatiale 20 en liaison DL, et pour reconstituer les trames de données initiales T₀₋ₙ.

Avantageusement, la station de communication 30 comprend un télescope (non représentée sur les figures), fonctionnant dans le deuxième ensemble de fréquences *λ*₂, configuré pour recevoir le signal S₂ optique provenant de la plateforme spatiale 20.

Le module 310 de traitement de signaux optiques comprend une unité 312 de démodulation configurée pour démoduler le signal S₂ optique reçu pour déterminer une pluralité de M trames de données entrelacées démodulées I*₂₋ₘ.

La démodulation appliquée par l'unité 312 peut être définie en fonction de la modulation du signal optique appliquée par la charge utile de communication de la plateforme spatiale 20, avant l'émission du signal S₂ optique. Chaque trame de données entrelacées démodulées I*₂₋ₘ correspond alors à la trame de données entrelacées I₂₋ₘ associée en prenant en compte l'évanouissement du canal optique subi par le signal optique.

Le module 310 de traitement de signal optique comprend également une unité 314 de désentrelacement de données configurée pour appliquer une fonction de désentrelacement à l'ensemble des M trames de données entrelacées démodulées I*₂₋ₘ, de manière à déterminer une pluralité de N trames de données désentrelacées B*₂₋ₙ.

La fonction de désentrelacement (ou *deinterleaving* en anglais) utilise des techniques de reclassement de bits des différentes trames de données. Chaque trame de données désentrelacées B*₂₋ₙ correspond alors à la trame de données démodulées intermédiaires encodées B₂₋ₙ associée en prenant en compte l'évanouissement du canal optique subis par des signaux optiques.

Avantageusement, la fonction de désentrelacement appliquée par l'unité 314 peut être définie en fonction de l'entrelacement appliqué par la charge utile de communication de la plateforme spatiale 20 avant l'émission du signal S₂ optiques.

Le module 310 de traitement de signal optique comprend également une unité 316 de décodage de données transmises configurée pour appliquer une fonction de décodage à l'ensemble des N trames de données désentrelacées B*₂₋ₙ, de manière à déterminer une pluralité de N trames de données décodées B*₁₋ₙ.

La fonction de décodage implémentée dans l'unité 316 peut être définie en fonction de l'encodage de données démodulées intermédiaires (c'est-à-dire des valeurs LLR quantifiés) de la charge utile de communication de la plateforme spatiale 20 correspondant au code correcteur d'erreur considéré dans le module 232. Chaque trame de données décodées B*₁₋ₙ correspond alors à la trame de données démodulées intermédiaires B₁₋ₙ associée en prenant en compte l'évanouissement du canal optique subis par des signaux optiques.

Par exemple et sans limitation, la fonction de décodage implémentée dans l'unité 316 peut être une fonction réciproque de la fonction de concaténation de la deuxième trame de redondance Bᵢ appliquée aux trames de données désentrelacées B*₂₋ₙ.

Avantageusement, une telle fonction de décodage peut être implémentée en prenant en compte la distribution gaussienne attendue des valeurs LLR retrouvées pour chaque trame de données décodées B*₁₋ₙ.

Par ailleurs, une telle fonction de décodage peut être implémentée en prenant en compte l'indice d'importance de chaque bit de chacune des valeurs LLR retrouvées pour chaque trame de données décodées B*₁₋ₙ.

Dans les modes de réalisation où le module 210 de traitement de signaux RF de la plateforme spatiale 20 comprend une unité 214 de compression de trames à valeurs souples, le module 330 de reconstruction de données peut comprendre une unité 332 de décompression de trames à valeurs souples configurée pour reconstituer les composantes LLR de la trame de données décodées B*₁₋ₙ et avantageusement compressées.

Par exemple et sans limitations, l'unité 332 de décompression de trames à valeurs souples peut être définie en fonction de la compression appliquée par l'unité 214 de compression de la plateforme spatiale 20.

En outre, le module 330 de reconstruction de données peut comprendre une unité 334 de décodage souple configurée pour appliquer une fonction de décodage à l'ensemble des N trames de données décodées B*₁₋ₙ (qui peuvent être optionnellement décompressées), de manière à déterminer une pluralité de N trames de données régénérées T*₀₋ₙ. Les valeurs LLR, ainsi récupérées à la sortie du module 316 (ou optionnellement 332), alimentent l'algorithme de décodage du premier code correcteur d'erreur de l'unité 334 de décodage souple, le premier code correcteur d'erreur ayant été implémenté au niveau du module 112-q d'encodage de données du module 110-q de génération de signal du terminal de communication sans fil 10-q.

Chaque trame de données régénérées T*₀₋ₙ (ou T*_{0-q}) correspond alors à la trame de données initiales T₀₋ₙ (ou T_{0-q}) associée reconstituée (i.e. régénérée) en prenant en compte l'évanouissement du canal optique subi par le ou les signaux optiques et les pertes subies par les signaux radiofréquence. Un tel décodage implémenté par exemple sous la forme d'un décodage souple itératif permet un gain de code ou de redondance suffisant pour reconstruire les trames de données initiales T₀₋ₙ à partir des valeurs LLR reconstituées à la sortie du module 310.

L'algorithme utilisé pour le décodage de données binaires codées peut être par exemple un algorithme de décodage FEC correspondant au type de codes correcteurs d'erreurs utilisés dans le module 110-q (c'est-à-dire un algorithme de Viterbi, un algorithme dit 'BCJR', un algorithme de propagation de croyances, un algorithme de turbo-décodage, etc.).

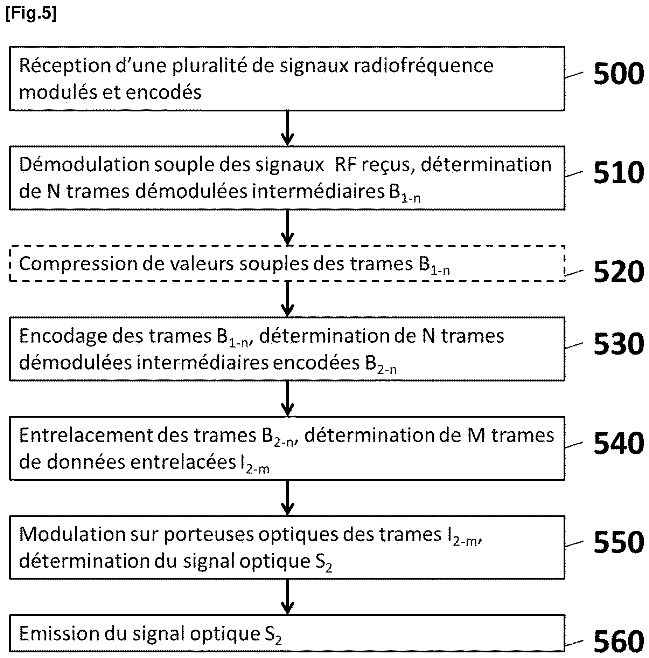

La figure 5 est un organigramme représentant les étapes du procédé de transmission de signaux optiques, mis en œuvre par le satellite de communication 20 (et en particulier par la charge utile de communication de la plateforme spatiale), selon des modes de réalisation de l'invention.

A l'étape 500, un signal radiofréquence ou une pluralité de signaux radiofréquence modulés et encodés est reçue par le satellite de communication 20.

A l'étape 510, une démodulation souple du ou des signaux RF reçus est appliquée pour déterminer N trames démodulées intermédiaires B₁₋ₙ.

A l'étape 520, une compression des N trames démodulées intermédiaires B₁₋ₙ peut être appliquée.

A l'étape 530, un encodage des N trames démodulées intermédiaires B₁₋ₙ est appliqué pour déterminer N trames démodulées intermédiaires encodées B₂₋ₙ, l'encodage appliqué correspondant à une fonction associée à un deuxième code correcteur d'erreur.

A l'étape 540, un entrelacement des N trames démodulées intermédiaires encodées B₂₋ₙ est appliqué pour déterminer M trames entrelacées I₂₋ₘ.

A l'étape 550, une modulation sur une ou plusieurs porteuses optiques des M trames entrelacées I₂₋ₘ est effectuée pour déterminer un signal S₂ optique (résultant).

A l'étape 560, le signal S₂ optique est émis par le satellite de communication 20, via le canal optique de transmission.

Les opérations de modulation, encodage, et compression sont mises en œuvre selon les modes de réalisation décrits ci-avant.

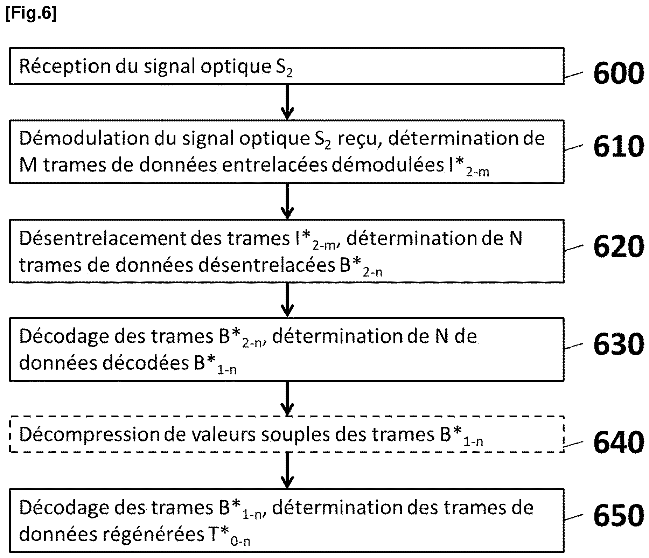

La figure 6 est un organigramme représentant le procédé de réception du ou de signaux optiques, mis en œuvre par la station de communication 30, selon des modes de réalisation de l'invention, afin de reconstituer les trames de données initiales associées aux signaux optiques reçus.

A l'étape 600, le signal S₂ optique (résultant), émis par le satellite de communication 20, via le canal optique de transmission, est reçu par la station de communication 30.

A l'étape 610, une démodulation du signal S₂ optique reçu est appliquée pour déterminer M trames de données entrelacées démodulées I*₂₋ₘ.

A l'étape 620, un désentrelacement des M trames de données entrelacées démodulées I*₂₋ₘ est appliqué pour déterminer N trames de données désentrelacées B*₂₋ₙ.

A l'étape 630, un décodage des N trames de données désentrelacées B*₂₋ₙ est appliqué pour déterminer N trames de données décodées B*₁₋ₙ. Un tel décodage appliqué peut correspondre à une fonction réciproque du deuxième code correcteur d'erreur implémenté au niveau du satellite de communication 20.

A l'étape 640, une décompression de trames à valeurs souples peut être appliquée pour déterminer (ou reconstituer) les composantes LLR de chacune des N trames décodées B*₁₋ₙ. Une telle décompression appliquée peut être appliquée en fonction de la compression des trames démodulées intermédiaires implémenté au niveau de la plateforme spatiale 20.

A l'étape 650, un décodage des N trames de données décodées B*₁₋ₙ est appliqué pour déterminer N trames de données régénérées T*₀₋ₙ. Un tel décodage appliqué peut correspondre à une fonction réciproque du premier code correcteur implémenté au niveau d'un terminal de communication sans fil 10-q.

Les opérations de démodulation, décodage, et décompression sont mises en œuvre selon les modes de réalisation décrits ci-avant.

L'homme du métier comprendra que les éléments de communication sans fils du système, selon les modes de réalisation de l'invention, peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Par exemple, les traitements numériques des procédés de l'invention peuvent être implémentés sur des FPGA ou des ASICs. Ces instructions de programme d'ordinateur peuvent également être stockées dans un support lisible par ordinateur.

L'invention n'est pas limitée aux modes de réalisation décrits ci-avant à titre d'exemples non limitatifs. Elle englobe toutes les variantes de réalisation qui pourront être envisagées par l'homme du métier. En particulier, l'homme du métier comprendra aisément que l'invention n'est pas limitée aux différents modules de la plateforme spatiale et de la station de communication, décrits à titre d'exemples non limitatif.

Par ailleurs, l'homme du métier comprendra aisément que la présente invention être implémentée dans n'importe quelle architecture NTN impliquant des équipements autres que des satellites fonctionnant à diverses altitudes inférieures aux déploiements d'altitude de satellites dits 'typiques', en fonction de la mise en œuvre, de l'attribution du spectre, et/ou de la couverture de service. Par exemple et sans limitations, de tels équipements peuvent être un ou plusieurs véhicules aéroportés ou spatiaux configurés pour les communications tels que les stations de plateforme à haute altitude ou à basse altitude, des systèmes d'aéronefs ou des véhicules aériens sans pilote (également appelés drones), etc.

## Revendications

1. Satellite de communication (20) configuré pour émettre un signal optique, à travers un canal optique de transmission, en réponse à la réception d'au moins un signal radiofréquence modulé et encodé, **caractérisé en ce que** ledit satellite (20) comprend :
- une unité (212) de démodulation souple configurée pour appliquer une démodulation souple audit au moins un signal radiofréquence reçu, ce qui fournit une pluralité de N trames de données démodulées intermédiaires B₁₋ₙ, chaque trame de données démodulées intermédiaires B₁₋ₙ comprenant un ensemble de valeurs souples numérisées ;
- une unité (232) d'encodage configurée pour appliquer un code correcteur d'erreur auxdites trames de données démodulées intermédiaires B₁₋ₙ, ce qui fournit une pluralité de N trames de données démodulées intermédiaires encodées B₂₋ₙ ;
- une unité (234) d'entrelacement configurée pour entrelacer lesdites N trames de données démodulées intermédiaires encodées B₂₋ₙ, ce qui fournit M trames de données entrelacées I₂₋ₘ ; et
- une unité (236) de modulation sur porteuses optiques configurée pour appliquer, à chaque trame de données entrelacées I₂₋ₘ, une modulation sur porteuse optique de manière à former ledit signal optique.

2. Satellite de communication (20), selon la revendication 1, dans lequel, pour chaque trame de données démodulées intermédiaires B₁₋ₙ, les valeurs souples numérisées sont définies selon une distribution gaussienne, et dans lequel ledit code correcteur d'erreur appliqué par ladite unité (232) d'encodage prend en compte ladite distribution gaussienne des valeurs souples numérisées des trames B₁₋ₙ.

3. Satellite de communication (20), selon l'une des revendications 1 ou 2, dans lequel, pour chaque trame de données démodulées intermédiaires B₁₋ₙ, chaque bit de quantification des valeurs souples numérisées est associé à un indice d'importance, et dans lequel ledit code correcteur d'erreur appliqué par ladite unité (232) d'encodage prend en compte ledit indice d'importance des bits des valeurs souples numérisées des trames B₁₋ₙ.

4. Station de communication (30) configurée pour recevoir à travers un canal optique de transmission un signal optique provenant d'un satellite et associé à une pluralité de trames de données initiales T_{0-q}, **caractérisé en ce que** ladite station de communication (30) comprend :
- une unité (312) de démodulation configurée pour démoduler ledit signal optique reçu, ce qui fournit M trames de données entrelacées démodulées I*₂₋ₘ ;
- une unité (314) de désentrelacement configurée pour désentrelacer les M trames de données entrelacées démodulées I*₂₋ₘ, ce qui fournit une pluralité de N trames de données désentrelacées B*₂₋ₙ ;
- une unité (316) de décodage configurée pour appliquer une fonction réciproque d'un code correcteur d'erreur auxdites trames de données désentrelacées B*₂₋ₙ, ce qui fournit une pluralité de N trames de données décodées B*₁₋ₙ, chaque trame B*₁₋ₙ comprenant un ensemble de valeurs souples numérisées ; et
- une unité (334) de décodage configurée pour appliquer une fonction de décodage de valeurs souples numérisées à l'ensemble des N trames de données décodées B*₁₋ₙ, ce qui fournit une pluralité de N trames de données régénérées T*₀₋ₙ, chaque trame de données régénérées T*₀₋ₙ correspondant à une trame reconstituée de données initiales T₀₋ₙ.

5. Station de communication (30), selon la revendication 4, dans lequel ladite fonction réciproque dudit code correcteur d'erreur appliquée par ladite unité (316) de décodage prend en compte une distribution gaussienne des valeurs souples des trames de données décodées B*₁₋ₙ générées.

6. Station de communication (30), selon l'une des revendications 4 ou 5, dans lequel ladite fonction réciproque dudit code correcteur d'erreur appliquée par ladite unité (316) de décodage prend en compte un indice d'importance associé à chaque bit des valeurs souples des trames de données décodées B*₁₋ₙ générées.

7. Système de communication sans fil (1) comprenant un satellite de communication (20) selon l'une des revendications 1 à 3, et une station de communication (30) selon l'une des revendications 4 à 6, reliés par un canal optique de transmission, et en ce que la station de communication (30) est configurée pour recevoir ledit signal optique en provenance du satellite de communication, à travers ledit canal optique de transmission, ladite fonction réciproque étant la fonction réciproque du code correcteur d'erreur appliqué par le satellite de communication.

8. Système de communication sans fil (1), selon la revendication 7, dans lequel ledit satellite de communication (20) comprend en outre une unité (214) de compression de trames à valeurs souples et ladite station de communication (30) comprend en outre une unité (332) de décompression de trames à valeurs souples.

9. Procédé pour émettre un signal optique, le procédé étant mis en œuvre dans un satellite de communication (20) relié à un canal optique de transmission, le procédé comprenant les étapes consistant à :
- recevoir (500) au moins un signal radiofréquence modulé et encodé ;
- appliquer (510) une démodulation souple audit au moins un signal radiofréquence reçu pour déterminer une pluralité de N trames de données démodulées intermédiaires B₁₋ₙ, chaque trame B₁₋ₙ comprenant un ensemble de valeurs souples numérisées ;
- appliquer (530) un code correcteur d'erreur auxdites trames de données démodulées intermédiaires B₁₋ₙ pour déterminer une pluralité de N trames de données démodulées intermédiaires encodées B₂₋ₙ ;
- appliquer (540) une fonction d'entrelacement auxdites trames de données démodulées intermédiaires encodées B₂₋ₙ pour déterminer M trames de données entrelacées I₂₋ₘ ;
- appliquer (550) une modulation sur porteuse optique à chaque trame de données entrelacées I₂₋ₘ, ce qui fournit ledit signal optique ; et
- émettre (560) ledit signal optique à travers ledit canal optique de transmission.

10. Procédé de réception d'un signal optique provenant d'un satellite, le procédé étant mis en œuvre par une station de communication (30) reliée à un canal optique de transmission, le procédé comprenant les étapes consistant à :
- recevoir (600) ledit signal optique associés à une pluralité de trames de données initiales T_{0-q}, à travers ledit canal optique de transmission ;
- appliquer (610) une démodulation audit signal optique reçu, ce qui fournit M trames de données entrelacées démodulées I*₂₋ₘ ;
- appliquer (620) une fonction de désentrelacement auxdites trames de données entrelacées démodulées I*₂₋ₘ, ce qui fournit une pluralité de N trames de données désentrelacées B*₂₋ₙ ;
- appliquer (630) une fonction réciproque d'un code correcteur d'erreur auxdites trames de données désentrelacées B*₂₋ₙ, ce qui fournit une pluralité de N trames de données décodées B*₁₋ₙ, chaque trame B*₁₋ₙ comprenant un ensemble de valeurs souples numérisées ; et
- appliquer (650) une fonction décodage de valeurs souples numérisées à l'ensemble des N trames de données décodées B*₁₋ₙ pour déterminer une pluralité de N trames de données régénérées T*₀₋ₙ, chaque trame de données régénérées T*₀₋ₙ correspondant à une trame reconstituée de données initiales T₀₋ₙ.

## Patentansprüche

1. Kommunikationssatellit (20), der konfiguriert ist, um ein optisches Signal durch einen optischen Übertragungskanal hindurch als Reaktion auf den Empfang mindestens eines modulierten und codierten Hochfrequenzsignals zu emittieren, **dadurch gekennzeichnet, dass** der Satellit (20) umfasst:
- eine flexible Demodulationseinheit (212), die konfiguriert ist, um eine flexible Demodulation auf das mindestens eine empfangene Hochfrequenzsignal anzuwenden, wodurch eine Vielzahl von N demodulierten Zwischendatenrahmen B₁₋ₙ bereitgestellt wird, wobei jeder demodulierte Zwischendatenrahmen B₁₋ₙ eine Einheit an digitalisierten flexiblen Werten umfasst;
- eine Codierungseinheit (232), die konfiguriert ist, um einen Fehlerkorrekturcode auf die demodulierten Zwischendatenrahmen B₁₋ₙ anzuwenden, wodurch eine Vielzahl von N codierten demodulierten Zwischendatenrahmen B₂₋ₙ bereitgestellt wird;
- eine Verschachtelungseinheit (234), die konfiguriert ist, um die N codierten demodulierten Zwischendatenrahmen B₂₋ₙ zu verschachteln, wodurch M verschachtelte Datenrahmen I₂₋ₘ bereitgestellt werden; und
- eine Modulationseinheit (236) auf optischen Trägern, die konfiguriert ist, um auf jeden verschachtelten Datenrahmen I₂₋ₘ eine Modulation auf einem optischen Träger anzuwenden, um das optische Signal zu bilden.

2. Kommunikationssatellit (20), nach Anspruch 1, wobei die digitalisierten flexiblen Werte für jeden demodulierten Zwischendatenrahmen B₁₋ₙ gemäß einer Gauß-Verteilung definiert sind, und wobei der durch die Codierungseinheit (232) angewendete Fehlerkorrekturcode die Gauß-Verteilung der digitalisierten flexiblen Werte der Rahmen B₁₋ₙ berücksichtigt.

3. Kommunikationssatellit (20), nach einem der Ansprüche 1 oder 2, wobei jedes Quantisierungsbit der digitalisierten flexiblen Werte für jeden demodulierten Zwischendatenrahmen B₁₋ₙ einem Bedeutungsindex zugeordnet ist, und wobei der durch die Codierungseinheit (232) angewendete Fehlerkorrekturcode den Bedeutungsindex der Bits der digitalisierten flexiblen Werte der Rahmen B₁₋ₙ berücksichtigt.

4. Kommunikationsstation (30), die konfiguriert ist, um ein von einem Satelliten stammendes und einer Vielzahl von anfänglichen Datenrahmen T_{0-q} zugeordnetes Signal durch einen optischen Übertragungskanal hindurch zu empfangen, **dadurch gekennzeichnet, dass** die Kommunikationsstation (30) umfasst:
- eine Demodulationseinheit (312), die konfiguriert ist, um das empfangene optische Signal zu demodulieren, wodurch M demodulierte verschachtelte Datenrahmen I*₂₋ₘ bereitgestellt werden;
- eine Entschachtelungseinheit (314), die konfiguriert ist, um die M demodulierten verschachtelten Datenrahmen I*₂₋ₘ zu entschachteln, wodurch eine Vielzahl von N entschachtelten Datenrahmen B*₂₋ₙ bereitgestellt wird;
- eine Decodierungseinheit (316), die konfiguriert ist, um eine gegenseitige Funktion eines Fehlerkorrekturcodes auf die entschachtelten Datenrahmen B*₂₋ₙ anzuwenden, wodurch eine Vielzahl von N decodierten Datenrahmen B*₁₋ₙ bereitgestellt wird, wobei jeder Rahmen B*₁₋ₙ eine Einheit an digitalisierten flexiblen Werten umfasst; und
- eine Decodierungseinheit (334), die konfiguriert ist, um eine Decodierungsfunktion digitalisierter flexibler Werte auf die Einheit der N decodierten Datenrahmen B*₁₋ₙ anzuwenden, wodurch eine Vielzahl von N regenerierten Datenrahmen T*₀₋ₙ bereitgestellt wird, wobei jeder regenerierte Datenrahmen T*₀₋ₙ einem rekonstituierten Rahmen anfänglicher Daten T₀₋ₙ entspricht.

5. Kommunikationsstation (30) nach Anspruch 4, wobei die gegenseitige Funktion des durch die Decodierungseinheit (316) angewendeten Fehlerkorrekturcodes eine Gauß-Verteilung der flexiblen Werte der generierten decodierten Datenrahmen B*₁₋ₙ berücksichtigt.

6. Kommunikationsstation (30) nach einem der Ansprüche 4 oder 5, wobei die gegenseitige Funktion des durch die Decodierungseinheit (316) angewendeten Fehlerkorrekturcodes einen Bedeutungsindex berücksichtigt, der jedem Bit der flexiblen Werte der generierten decodierten Datenrahmen B*₁₋ₙ zugeordnet ist.

7. Drahtloses Kommunikationssystem (1), das einen Kommunikationssatelliten (20) nach einem der Ansprüche 1 bis 3, und eine Kommunikationsstation (30) nach einem der Ansprüche 4 bis 6 umfasst, die durch einen optischen Übertragungskanal verbunden sind, und dadurch dass die Kommunikationsstation (30) konfiguriert ist, um das optische Signal vom Kommunikationssatelliten durch den optischen Übertragungskanal hindurch zu empfangen, wobei die gegenseitige Funktion die gegenseitige Funktion des durch den Kommunikationssatelliten angewendeten Fehlerkorrekturcodes ist.

8. Drahtloses Kommunikationssystem (1), nach Anspruch 7, wobei der Kommunikationssatellit (20) weiter eine Kompressionseinheit (214) für Rahmen mit flexiblen Werten umfasst, und die Kommunikationsstation (30) weiter eine Dekompressionseinheit (332) für Rahmen mit flexiblen Werten umfasst.

9. Verfahren zum Emittieren eines optischen Signals, wobei das Verfahren in einem Kommunikationssatelliten (20) umgesetzt wird, der mit einem optischen Übertragungskanal verbunden ist, wobei das Verfahren die Schritte umfasst, die darin bestehen:
- mindestens ein moduliertes und codiertes Hochfrequenzsignal zu empfangen (500);
- eine flexible Demodulation auf das mindestens eine empfangene Hochfrequenzsignal anzuwenden (510), um eine Vielzahl von N demodulierten Zwischendatenrahmen B₁₋ₙ zu bestimmen, wobei jeder Rahmen B₁₋ₙ eine Einheit an digitalisierten flexiblen Werten umfasst;
- einen Fehlerkorrekturcode auf die demodulierten Zwischendatenrahmen B₁₋ₙ anzuwenden (530), um eine Vielzahl von N codierten demodulierten Zwischendatenrahmen B₂₋ₙ zu bestimmen;
- eine Verschachtelungsfunktion auf die codierten demodulierten Zwischenrahmendaten B₂₋ₙ anzuwenden (540), um M verschachtelte Datenrahmen I₂₋ₘ zu bestimmen;
- eine Modulation auf einen optischen Träger auf jeden verschachtelten Datenrahmen I₂₋ₘ anzuwenden (550), wodurch das optische Signal bereitgestellt wird; und
- das optische Signal durch den optischen Übertragungskanal hindurch zu emittieren (560).

10. Verfahren zum Empfangen eines von einem Satelliten stammenden optischen Signals, wobei das Verfahren durch eine Kommunikationsstation (30) umgesetzt wird, der mit einem optischen Übertragungskanal verbunden ist, wobei das Verfahren die Schritte umfasst, die darin bestehen:
- das optische Signal, das einer Vielzahl von anfänglichen Datenrahmen T_{0-q} zugeordnet ist, durch den optischen Übertragungskanal hindurch zu empfangen (600);
- eine Demodulation auf das empfangene optische Signal anzuwenden (610), wodurch M demodulierte verschachtelte Datenrahmen I*₂₋ₘ bereitgestellt werden;
- eine Entschachtelungsfunktion auf die demodulierten verschachtelten Datenrahmen I*₂₋ₘ anzuwenden (620), wodurch eine Vielzahl von N entschachtelten Datenrahmen B*₂₋ₙ bereitgestellt wird;
- eine gegenseitige Funktion eines Fehlerkorrekturcodes auf die entschachtelten Datenrahmen B*₂₋ₙ anzuwenden (630), wodurch eine Vielzahl von N decodierten Datenrahmen B*₁₋ₙ bereitgestellt wird, wobei jeder Rahmen B*₁₋ₙ eine Einheit an digitalisierten flexiblen Werten umfasst; und
- eine Decodierungsfunktion digitalisierter flexibler Werte auf die Einheit der N decodierten Datenrahmen B*₁₋ₙ anzuwenden, um eine Vielzahl von N regenerierten Datenrahmen T*₀₋ₙ zu bestimmen, wobei jeder regenerierte Datenrahmen T*₀₋ₙ einem rekonstituierten Rahmen anfänglicher Daten T₀₋ₙ entspricht

## Claims

1. Communication satellite (20) configured to emit an optical signal, through an optical transmission channel, in response to receiving at least one modulated and encoded RF signal, **characterized in that** said satellite (20) comprises:
- a soft demodulation unit (212) configured to apply a soft demodulation to said at least one received RF signal, which provides a plurality of N intermediate demodulated dataframes B₁₋ₙ, each intermediate demodulated dataframe B₁₋ₙ comprising a set of digitized soft values;
- an encoding unit (232) configured to apply an error correction code to said intermediate demodulated dataframes B₁₋ₙ, which provides a plurality of N encoded intermediate demodulated dataframes B₂₋ₙ;
- an interleaving unit (234) configured to interleave said N encoded intermediate dataframes B₂₋ₙ, which provides N interleaved dataframes I₂₋ₘ; and
- a modulation unit (236) on optical carriers configured to apply, to each interleaved dataframe I₂₋ₘ, a modulation on optical carrier, so as to form said optical signal.

2. Communication satellite (20) according to claim 1, wherein, for each intermediate demodulated dataframe B₁₋ₙ, the digitized soft values are defined according to a Gaussian distribution, and wherein said error correction code applied by said encoding unit (232) takes into account said Gaussian distribution of the digitized soft values of the frames B₁₋ₙ.

3. Communication satellite (20) according to any one of claims 1 or 2, wherein, for each intermediate demodulated dataframe B₁₋ₙ, each quantification bit of the digitized soft values is associated with an importance index, and wherein said error correction code applied by said encoding unit (232) takes into account said importance index of the bits of the digitized soft values of the frames B₁₋ₙ.

4. Communication station (30) configured to receive through an optical transmission channel, an optical signal coming from a satellite and associated with a plurality of initial dataframes T_{0-q}, **characterized in that** said communication station (30) comprises:
- a demodulation unit (312) configured to demodulate said received optical signal, which provides M demodulated interleaved dataframes I*₂₋ₘ;
- a deinterleaving unit (314) configured to deinterleave the M demodulated interleaved dataframes I*₂₋ₘ, which provides a plurality of N deinterleaved dataframes B*₂₋ₙ ;
- a decoding unit (316) configured to apply a reciprocal function of an error correction code to said deinterleaved dataframes B*₂₋ₙ, which provides a plurality of N decoded dataframes B*₁₋ₙ, each frame B*₁₋ₙ comprising a set of digitized values; and
- a decoding unit (334) configured to apply a decoding function of digitized soft values to the set of N decoded dataframes B*₁₋ₙ, which provides a plurality of N regenerated dataframes T*₀₋ₙ, each regenerated dataframe T*₀₋ₙ corresponding to a reconstituted initial dataframe T₀₋ₙ.

5. Communication station (30) according to claim 4, wherein said reciprocal function of said error correction code applied by said decoding unit (316) takes into account a Gaussian distribution of the soft values of the generated decoded dataframes B*₁₋ₙ.

6. Communication station (30) according to any one of claims 4 or 5, wherein said reciprocal function of said error correction code applied by said decoding unit (316) takes into account an importance index associated with each bit of the soft values of the generated decoded dataframes B*₁₋ₙ.

7. Wireless communication system (1) comprising a communication satellite (20) according to any one of claims 1 to 3, and a communication station (30) according to any one of claims 4 to 6, connected by an optical transmission channel, and in that the communication station (30) is configured to receive said optical signal coming from the communication station, through said optical transmission channel, said reciprocal function being the reciprocal function of the error correction code applied by the communication satellite.

8. Wireless communication system (1) according to claim 7, wherein said communication satellite (20) further comprises a frame compression unit (214) with soft values and said communication station (30) further comprises a frame decompression unit (332) with soft values.

9. Method for emitting an optical signal, the method being implemented in a communication satellite (20) connected to an optical transmission channel, the method comprising steps consisting of:
- receiving (500) at least one modulated and encoded RF signal;
- applying (510) a soft demodulation to said at least one received RF signal to determined a plurality of N intermediate demodulated dataframes B₁₋ₙ, each frame B₁₋ₙ comprising a set of digitized soft values;
- applying (530) an error correction code to said intermediate demodulated dataframes B₁₋ₙ to determine a plurality of N encoded intermediate demodulated dataframes B₂₋ₙ;
- applying (540) an interleaving function to said encoded intermediate demodulated dataframes B₂₋ₙ to determine M interleaved dataframes I₂₋ₘ;
- applying (550) a modulation on optical carrier to each interleaved dataframe I₂₋ₘ, which provides said optical signal; and
- emitting (560) said optical signal through said optical transmission channel.

10. Method for receiving an optical signal coming from a satellite, the method being implemented by a communication satellite (30) connected to an optical transmission channel, the method comprising steps consisting of:
- receiving (600) said optical signal associated with a plurality of initial dataframes T_{0-q}, through said optical transmission channel;
- applying (610) a demodulation unit to said received optical signal, which provides M demodulated interleaved dataframes I*₂₋ₘ;
- applying (620) a deinterleaving function to said demodulated interleaved dataframes I*₂₋ₘ, which provides a plurality of N deinterleaved dataframes B*₂₋ₙ ;
- applying (630) a reciprocal function of an error corrector code to said deinterleaved dataframes B*₂₋ₙ, which provides a plurality of N decoded dataframes B*₁₋ₙ, each frame B*₁₋ₙ comprising a set of digitized values; and
- applying (650) a decoding function of digitized soft values to the set of N decoded dataframes B*₁₋ₙ to determine a plurality of N regenerated dataframes T*₀₋ₙ, each regenerated dataframe T*₀₋ₙ corresponding to a reconstituted initial dataframe T₀₋ₙ.
